# EUROPÄISCHE PATENTSCHRIFT

(11) **EP 1 836 241 B1**
(45) Veröffentlichungstag und Bekanntmachung des Hinweises auf die Patenterteilung: **24.03.2010**
(21) Anmeldenummer: 06704592.2
(22) Anmeldetag: 10.01.2006
(51) Int. Cl.: C08J 7/00, C08J 7/12, C08K 5/00, G03C 1/85

(54) **ANTISTATISCHE OBERFLÄCHENAUSRÜSTUNG**
ANTISTATIC SURFACE FINISH
TRAITEMENT DE SURFACE ANTISTATIQUE

(30) Priorität: 12.01.2005 DE 102005001616
(43) Veröffentlichungstag der Anmeldung: 26.09.2007
(73) Patentinhaber: Huhtamaki Forchheim Zweigniederlassung der Huhtamaki Deutschland GmbH & Co. KG, 91301 Forchheim (DE)
(72) Erfinder: PANHANS, Jürgen, 91301 Forchheim (DE); BAUER, Michael, 91301 Forchheim (DE)
(74) Vertreter: Hutzelmann, Gerhard
(86) Internationale Anmeldenummer: PCT/EP2006/050139
(87) Internationale Veröffentlichungsnummer: WO 2006/075003

(56) Entgegenhaltungen:
- EP-A- 1 239 001
- DE-A1- 19 829 788
- US-A- 3 661 627
- US-A- 4 746 697
- US-A- 5 403 879
- US-A1- 2003 119 951
- PATENT ABSTRACTS OF JAPAN Bd. 1997, Nr. 12, 25. Dezember 1997 (1997-12-25) & JP 09 221587 A (MITSUBISHI PLASTICS IND LTD; SHIMADZU CORP), 26. August 1997 (1997-08-26)

## Beschreibung

Die Erfindung bezieht sich auf eine antistatische Oberflächenausrüstung für eine Kunststofffolie.

Es ist eine Vielzahl verschiedener Oberflächenausrüstungen bekannt, die jedoch meistens keine antistatischen Eigenschaften aufweisen. Wenn die bekannten Oberflächenausrüstungen antistatische Eigenschaften aufweisen, werden diese nur durch andere nachteilige Eigenschaften erkauft.

Aus der EP-A-1 239 001 ist beispielsweise eine Styrene Folie bekannt, die antistatische Eigenschaften aufweist, wobei die Folie zur Erlangung der antistatischen Eigenschaften hydrophil behandelt wird.

Aus der JP 09 221587A ist desweiteren ein PLA bekannt, das mit Polyethylenglykol behandelt wurde um antistatische Eigenschaften zu erzeugen.

Aufgabe der Erfindung ist es eine antistatische Oberflächenausrüstung vorzuschlagen, die diese Eigenschaften aufweist, ohne andere Eigenschaften der Oberfläche nachteilig zu beeinflussen und gute antistatische Eigenschaften zu erzeugen.

Diese Aufgabe wird erfindungsgemäß dadurch gelöst, daß der Oberfläche ein Additiv zugefügt ist, welches die antistatischen Eigenschaften erzeugt, wobei als Additiv ein Mattierungsmittel für Kunststofffolien und/oder ein Methylendiaminomethyletherpolykondensatz enthalten ist.

Durch diese Additive werden die antistatischen Eigenschaften erzeugt, ohne die anderweitigen Eigenschaften der Kunststoffolie negativ zu beeinflussen.

Es hat sich auch als äußerst vorteilhaft erwiesen, wenn die Oberfläche mit einer Antihaftausrüstung ausgestattet ist.

Dabei ist es sehr vorteilhaft, wenn die Oberfläche mit einer Silikonisierung versehen ist.

Gerade silikonisierte Oberflächen neigen sehr zu unerwünschter statischer Aufladung, weswegen die Kombination von silikonisierter Oberfläche und antistatischer Ausrüstung sehr vorteilhaft ist.

Eine weitere sehr vorteilhafte Ausgestaltung der Erfindung liegt auch dann vor, wenn die Silikonisierung mit dem Additiv versehen ist.

Durch die Ausrüstung der Silikonisierung mit dem Additiv wird die Silikonsierung antistatisch.

Gemäß einer sehr vorteilhaften Ausgestaltung der Erfindung kann auch die Silikonisierung durch ein lösungsmittelhaltiges Silikon gebildet werden.

Ebenfalls äußerst vorteilhaft ist es auch, wenn die Silikonisierung durch ein lösungsmittelfreies Silikon gebildet wird.

Weiterhin ist es auch sehr vorteilhaft, wenn die Silikonisierung durch ein UV vernetzbares und/oder UV härtbares Silikon gebildet wird.

Je nach Einsatzzweck haben lösungsmittelhaltige, lösungsmittelfreie und UV vernetzbare und/oder UV härtbare Silikone besondere Vorteile.

Eine ebenfalls äußerst vorteilhafte Fortbildung der Erfindung liegt auch darin, daß das Additiv physikalisch in die Oberfläche, eine Oberflächenschicht und/oder eine Oberflächenbeschichtung der Kunststofffolie eingebettet ist.

Hierdurch wird das Additiv zwar in die Moleküle eingebettet, jedoch können Migrationsprozesse des Additivs zum Beispiel an die Oberfläche stattfinden.

Eine ebenfalls sehr vorteilhafte Ausgestaltung der Erfindung liegt auch dann vor, wenn das Additiv chemisch in die Oberfläche, eine Oberflächenschicht und/oder eine Oberflächenbeschichtung eingebunden ist.

Damit wird das Additiv fest in die Molekülstruktur eingebunden.

Es hat sich auch als sehr vorteilhaft erwiesen, wenn als Additiv Kohlenstoff, insbesondere Graphit vorgesehen ist.

Kohlenstoff weist gute elektrische Eigenschaften auf und verhindert bereits in geringen Mengen statische Aufladungen.

Sehr vorteilhaft ist es auch, wenn Polyethylenglykol als Additiventhalten ist, wobei dem Polyethylenglykol Acrylat- und/oder Metacrylat-Gruppen zugefügt sein können.

Polyethylenglykol vernetzt im allgemeinen nicht mit Silikonen und wird deswegen in der Regel physikalisch in die Molekülstruktur eingebettet. Hierdurch wird auch eine Migration des Polyethylenglykols an die Oberfläche ermöglicht um die antistatischen Eigenschaften zu beeinflussen.Durch die Acrylat- und/oder Methacrylat-Gruppen kann das Polyethylenglykol chemisch an die Moleküle der Oberfläche gebunden werden.

Eine weitere äußerst vorteilhafte Ausgestaltung der Erfindung ist auch darin zu sehen, daß als Additiv ein elektrisch leitfähiges Material vorgesehen ist.

Dabei hat es sich als sehr vorteilhaft erwiesen, wenn als Additiv ein Metall, wie zum Beispiel Aluminium, vorgesehen ist.

Hierdurch kann neben dem antistatischen Effekt auch noch eine relevante elektrische Leitfähigkeit der Kunststofffolie vorgesehen werden.

Methylendiaminomethyletherpolykondensat hat sich als sehr guter Stoff zur Verbesserung der antistatischen Eigenschaften der Oberfläche der Kunststoffolie erwiesen.

Mattierungsmittel sind am Markt leicht und kostengünstig beschaffbar und ermöglichen beim Zusetzen des Mittels sehr gute antistatische Eigenschaften.

Sehr vorteilhaft ist es auch, wenn das Additiv fein verteilt angeordnet ist.

Die Eigenschaften von insbesondere granulierten Additiven Feststoff-Additiven sind sehr gleichmäßig, wenn diese fein verteilt in den Kunststoff oder die Oberflächenschicht eingebracht sind.

Es hat sich auch als äußerst vorteilhaft erwiesen, wenn das Additiv in Form von Blättchen vorgesehen ist.

Hiermit lassen sich die antistatischen Eigenschaften besonders gut einstellen.

Gemäß einer weiteren Ausgestaltung der Erfindung ist es sehr vorteilhaft, wenn das Additiv in einer Konzentration zwischen 0,1 und 10 Prozent, vorzugsweise zwischen 0,1 und 3 % dem Kunststoff oder der Oberflächenbeschichtung zugefügt ist.

Es reichen schon geringe Konzentrationen eines Additivs aus, um die gewünschten antistatischen Eigenschaften zu erzielen.

Im folgenden wird die Erfindung anhand eines Ausführungsbeispiels veranschaulicht.

Auf einer Kunststofffolie ist einseitig eine Silikonisierung aus einem lösungsmittelhaitigen Silikon aufgebracht. Derartige Folien neigen sehr stark zu statischer Aufladung, die bei der Handhabung solcher Folien insbesondere bei Verpackungsprozessen unerwünscht ist und vermieden werden sollte.

Deswegen wird dem Silikon als Additiv ein Methylendiaminomethyletherpolykondensat zugegeben, welches dafür sorgt, daß die statische Aufladung extrem vermindert wird.

Messungen haben ergeben, daß sich eine silikonisierte Polypropylenfolie auf bis zu 30kV/m auflädt. Diese Ladung klingt über 60 Sekunden ab auf etwa 29,2kV/m. Wird nun dieselbe Polypropylenfolie mit einer mit dem Additiv versehenen Silikonisierung ausgerüstet, sinkt einerseits die maximale Ladung drastisch, die zudem noch schneller abklingt. Messungen an dieser Folie haben ergeben, daß sich diese Folie auf der mit der Silikonisierung versehenen Seite nur noch auf maximal 4kV/m auflädt. Die Ladung klingt dann innerhalb von 60 Sekunden ab auf 3kV/m. Eine weitere Messung auf der Rückseite derselben Folie führte wieder zu höheren Werten. Die maximale Ladung auf der Rückseite betrug 19kV/m, wobei diese gegenüber der herkömmlichen Folie trotzdem schneller abklingt, und zwar innerhalb von 60 Sekunden auf 16,5 kV/m.

Die mit dem Additiv versehene Silikonsierung lädt sich nicht nur selbst weniger stark auf, sondern beeinflusst sogar die Rückseite der Kunststofffolie derart, daß auch dort die statische Aufladung vermindert wird.

Weitere Untersuchungen haben ergeben, daß weder die Trennkraft noch die Klebkraftminderung eines mit der additivierten Silikonsierung abgedeckten Haftklebstoffes gegenüber einer herkömmlichen Silikonsisierung verändert wird.

Es ist denkbar, daß für die Silikonisierung auch lösungsmittelfreies Silikon eingesetzt wird.

Die erfindungsgemäße antistatische Ausrüstung kann auf beliebigen Kunststofffolien-Substraten aufgebracht werden.

### Auch ist es denkbar, daß anstatt des Additivs

Methylendiaminomethyletherpolykondensat auch Polyethylenglykol, mit Acrylat- und/oder Metacrylat-Gruppen versehenes Polyethylenglykol, ein beliebiges elektrisch leitfähiges Material, Kohlenstoff oder auch Aluminium-Partikel entweder alleine oder in Kombination mit den anderen Stoffen als Additiv eingesetzt werden können.

Bei der Verwendung von Feststoffen als Additiv empfiehlt sich der Einsatz einer vorbereiteten Paste, die in das Oberflächenmaterial der Kunststoffolie eingebracht und dort, nach Möglichkeit homogen, verteilt wird.

## Patentansprüche

1. Antistatische Oberflächenausrüstung für eine Kunststofffolie, **dadurch gekennzeichnet, daß** der Oberfläche ein Additiv zugefügt ist, welches die antistatischen Eigenschaften erzeugt, wobei als Additiv ein Mattierungsmittel für Kunststofffolien und/oder ein Methylendiaminomethyletherpolykondensat enthalten ist.

2. Oberflächenausrüstung nach Anspruch 1, **dadurch gekennzeichnet, daß** die Oberfläche mit einer Antihaftausrüstung ausgestattet ist.

3. Oberflächenausrüstung nach Anspruch 2, **dadurch gekennzeichnet, daß** die Oberfläche mit einer Silikonisierung versehen ist.

4. Oberflächenausrüstung nach Anspruch 3, **dadurch gekennzeichnet, daß** die Silikonisierung mit dem Additiv versehen ist.

5. Oberflächenausrüstung nach Anspruch 3 oder 4, **dadurch gekennzeichnet, daß** die Silikonisierung durch ein lösungsmittelhaltiges Silikon gebildet wird.

6. Oberflächenausrüstung nach Anspruch 3 oder 4, **dadurch gekennzeichnet, daß** die Silikonisierung durch ein lösungsmittelfreies Silikon gebildet wird.

7. Oberflächenausrüstung nach Anspruch 3 oder 4, **dadurch gekennzeichnet, daß** die Silikonisierung durch ein UV vernetzbares und/oder UV härtbares Silikon gebildet wird.

8. Oberflächenausrüstung nach einem der vorangehenden Ansprüche, **dadurch gekennzeichnet, daß** das Additiv physikalisch in die Oberfläche, eine Oberflächenschicht und/oder eine Oberflächenbeschichtung der Kunststofffolie eingebettet ist.

9. Oberflächenausrüstung nach einem der Ansprüche 1 bis 7, **dadurch gekennzeichnet, daß** das Additiv chemisch in die Oberfläche, eine Oberflächenschicht und/oder eine Oberflächenbeschichtung eingebunden ist.

10. Oberflächenausrüstung nach einem der vorangehenden Ansprüche, **dadurch gekennzeichnet, daß** als Additiv Kohlenstoff oder Graphit enthalten ist.

11. Oberflächenausrustung nach einem der vorangehenden Ansprüche, **dadurch gekennzeichnet, daß** Polyethylenglykol als Additiv enthalten ist, wobei dem Polyethylenglykol Acrylat- und/oder Methacrylat-Gruppen zugefügt sein können.

12. Oberflächenausrüstung nach einem der vorangehenden Ansprüche, **dadurch gekennzeichnet, daß** als Additiv ein elektrisch leitfähiges Material enthalten ist.

13. Oberflächenausrüstung nach Anspruch 12, **dadurch gekennzeichnet, daß** als Additiv ein Metall enthalten ist.

14. Oberflächenausrüstung nach einem der vorangehenden Ansprüche, **dadurch gekennzeichnet, daß** das Additiv fein verteilt angeordnet ist.

15. Oberflächenausrüstung nach einem der vorangehenden Ansprüche, **dadurch gekennzeichnet, daß** das Additiv in Form von Blättchen enthalten ist.

16. Oberflächenausrüstung nach einem der vorangehenden Ansprüche, **dadurch gekennzeichnet, daß** das Additiv in einer Konzentration zwischen 0,1 und 10 Prozent, vorzugsweise zwischen 0,1 und 3 % dem Kunststoff oder der Oberflächenbeschichtung zugefügt ist.

## Claims

1. Antistatic surface finish for a plastics material film, **characterised in that** an additive producing the antistatic properties is added to the surface, wherein a delustering agent for plastics material films and/or a methylenediaminomethylether polycondensate is or are included as additive.

2. Surface finish according to claim 1, **characterised in that** the surface is furnished with an anti-adhesion finish.

3. Surface finish according to claim 2, **characterised in that** the surface is provided with a siliconising.

4. Surface finish according to claim 3, **characterised in that** the siliconising is provided with the additive.

5. Surface finish according to claim 3 or 4, **characterised in that** the siliconising is formed by a silicone containing solvent.

6. Surface finish according to claim 3 or 4, **characterised in that** the siliconising is formed by a silicone free of solvent.

7. Surface finish according to claim 3 or 4, **characterised in that** the siliconising is formed by a UV cross-linkable and/or UV hardenable silicone.

8. Surface finish according to any one of the preceding claims, **characterised in that** the additive is physically embedded in the surface, a surface layer and/or a surface coating of the plastics material film.

9. Surface finish according to any one of claims 1 to 7, **characterised in that** the additive is chemically bound in the surface, a surface layer and/or a surface coating.

10. Surface finish according to any one of the preceding claims, **characterised in that** carbon or graphite is included as additive.

11. Surface finish according to any one of the preceding claims, **characterised in that** polyethyleneglycol is included as additive, wherein acrylate and/or methacrylate groups can be added to the polyethyleneglycol.

12. Surface finish according to any one of the preceding claims, **characterised in that** an electrically conductive material is included as additive.

13. Surface finish according to claim 1, **characterised in that** a metal is included as additive.

14. Surface finish according to any one of the preceding claims, **characterised in that** the additive is arranged to be finely distributed.

15. Surface finish according to any one of the preceding claims, **characterised in that** the additive is present in the form of flakes.

16. Surface finish according to any one of the preceding claims, **characterised in that** the additive is added in a concentration between 0.1 and 10 percent, preferably between 0.1 and 3 percent, to the plastics material or the surface coating.

## Revendications

1. Traitement de surface antistatique pour une feuille de matière plastique, **caractérisé en ce qu'**un additif est ajouté à la surface, lequel produit les propriétés antistatiques, un agent de matage pour feuilles de matière plastique et/ou un polycondensat de méthylènediaminométhyl-éther étant contenu comme additif.

2. Traitement de surface selon la revendication 1, **caractérisé en ce que** la surface est munie d'un traitement anti-adhérent.

3. Traitement de surface selon la revendication 2, **caractérisé en ce que** la surface est munie d'une siliconisation.

4. Traitement de surface selon la revendication 3, **caractérisé en ce que** la siliconisation est munie de l'additif.

5. Traitement de surface selon la revendication 3 ou 4, **caractérisé en ce que** la siliconisation est formée par un silicone contenant des solvants.

6. Traitement de surface selon la revendication 3 ou 4, **caractérisé en ce que** la siliconisation est formée par un silicone sans solvants.

7. Traitement de surface selon la revendication 3 ou 4, **caractérisé en ce que** la siliconisation est formée par un silicone réticulable aux UV et/ou durcissable aux UV.

8. Traitement de surface selon une des revendications précédentes, **caractérisé en ce que** l'additif est intégré physiquement dans la surface, une couche superficielle et/ou un revêtement de surface de la feuille de matière plastique.

9. Traitement de surface selon une des revendications 1 à 7, **caractérisé en ce que** l'additif est lié chimiquement dans la surface, une couche superficielle et/ou un revêtement de surface.

10. Traitement de surface selon une des revendications précédentes, **caractérisé en ce que** du carbone ou du graphite est contenu comme additif.

11. Traitement de surface selon une des revendications précédentes, **caractérisé en ce que** du polyéthylèneglycol est contenu comme additif, des groupes acrylate et/ou méthacrylate pouvant être ajoutés au polyéthylèneglycol.

12. Traitement de surface selon une des revendications précédentes, **caractérisé en ce qu'**une matière électriquement conductrice est contenue comme additif.

13. Traitement de surface selon la revendication 12, **caractérisé en ce qu'**un métal est contenu comme additif.

14. Traitement de surface selon une des revendications précédentes, **caractérisé en ce que** l'additif est disposé de manière finement répartie.

15. Traitement de surface selon une des revendications précédentes, **caractérisé en ce que** l'additif est contenu sous la forme de feuillets.

16. Traitement de surface selon une des revendications précédentes, **caractérisé en ce que** l'additif est ajouté dans une concentration comprise entre 0,1 et 10 pour cent, de préférence entre 0,1 et 3 %, à la matière plastique ou au revêtement de surface.
